# EUROPEAN PATENT SPECIFICATION

(11) **EP 4 400 011 B1**
(45) Date of publication and mention of the grant of the patent: **04.03.2026**
(21) Application number: 24151292.0
(22) Date of filing: 11.01.2024
(51) Int. Cl.: A47J 43/07

(54) **FOOD PROCESSOR OPTIMIZED DICING KIT SYSTEM**
OPTIMIERTES ZERSCHNEIDE-KITSYSTEM FÜR LEBENSMITTELPROZESSOR
SYSTÈME DE KIT DE DÉCOUPAGE OPTIMISÉ POUR ROBOT DE CUISINE

(30) Priority: 12.01.2023 US 202318153619
(43) Date of publication of application: 17.07.2024
(73) Proprietor: Whirlpool Corporation, Benton Harbor, MI 49022 (US)
(72) Inventor: Bradley, Samuel J., Benton Harbor, MI 49022 (US); Haney, Edward James, Benton Harbor, MI 49022 (US); Leitert, Andrew John, Benton Harbor, MI 49022 (US); Shewale, Pravin R., Benton Harbor, MI 49022 (US)
(74) Representative: Eisenführ Speiser

(56) References cited:
- WO-A1-2021/259251
- CN-A- 107 756 510
- US-B2- 9 763 543

## Description

### FIELD OF THE DISCLOSURE

The present disclosure generally relates to a food processor appliance, and, more specifically, to a food processor appliance with a dicing assembly.

### BACKGROUND

Food processing appliances typically include several complementary accessories for various types of food processing. One common type of accessory includes a pinning blade for chopping, dicing, and other various cutting operations. The accessory is typically releasably connected to the food processing appliance. In this manner, various accessories may be connected to a single food processing appliance for a desired type of food processing. In addition, once the food processing is complete, the accessory must often be removed in order to thoroughly clean the accessory and interfacing surfaces of the food processing appliance. The connection and removal of the accessory can often times be difficult, requiring disassembling the accessory in several parts that must be reassembled after cleaning. In addition, when the accessory includes a blade, the user's safety must be considered. For example, U.S. Patent No. 9,763,543B2 (the '543 Patent) discloses a food processor with a dicing function, the food processor includes a dicing knife component that rotates and is guided by an annular groove.

Accordingly, the present disclosure relates to a food processor appliance with a dicing assembly with a limited number of parts that can be quickly and safely removed from the food processor appliance.

### SUMMARY OF THE DISCLOSURE

According to one aspect of the present disclosure, a dicer assembly for a food processor appliance includes a blade unit that has a driven hub, a first arm that extends from the driven hub, and a second arm that extends from the driven hub opposite the first arm. A first blade is connected to and extends along the first arm. A first trolley extends from the first arm opposite the driven hub, and a second trolley extends from the second arm opposite the driven hub. An outer ring defines a guide rail slidably coupled with the first trolley and the second trolley.

According to another aspect of the present disclosure, a dicer assembly for a food processor appliance includes a blade unit that has a driven hub, a first arm that extends from the driven hub, and a second arm that extends from the driven hub opposite the first arm. A first blade is connected to and extends along the first arm, and a second blade is connected to and extends along the second arm. A first trolley extends from the first arm opposite the driven hub, and a second trolley extends from the second arm opposite the driven hub. An outer ring defines a floor, and a guide rail extends annularly from the floor that is slideably coupled with the first trolley and the second trolley.

According to yet another aspect of the present disclosure, a dicer assembly for a food processor appliance includes an outer ring that defines a guide rail with an outer lip that defines an outer radius of the guide rail. A blade unit includes a driven hub, a first arm that extends from the driven hub, and a second arm that extends from the driven hub opposite the first arm. A first blade is connected to and extends along the first arm, and a second blade is connected to and extends along the second arm. A first trolley extends from the first arm opposite the driven hub and includes an inwardly extending flange that is slidably coupled and in overlapping radial alignment with the outer lip. A second trolley extends from the second arm opposite the driven hub and is slidably coupled to the guide rail.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a schematic view of a food processor appliance according to one aspect of the present disclosure;
FIG. 2 is a side perspective view of a dicer assembly in accordance with a first construction according to one aspect of the present disclosure;
FIG. 3 is a plan view of a dicer assembly in accordance with a first construction according to one aspect of the present disclosure;
FIG. 4 is a top perspective view of a dicer assembly in accordance with a second construction according to one aspect of the present disclosure;
FIG. 5 is a top perspective view of a dicer assembly in accordance with a third construction according to one aspect of the present disclosure; and
FIG. 6 is a side cross-sectional view of a dicer assembly in accordance with a third construction according to one aspect of the present disclosure.

The components in the figures are not necessarily to scale. Emphasis is instead being placed upon illustrating the principles described herein.

### DETAILED DESCRIPTION

The present illustrated embodiments reside primarily in combinations of method steps and apparatus components related to a food processor appliance with a dicing assembly. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

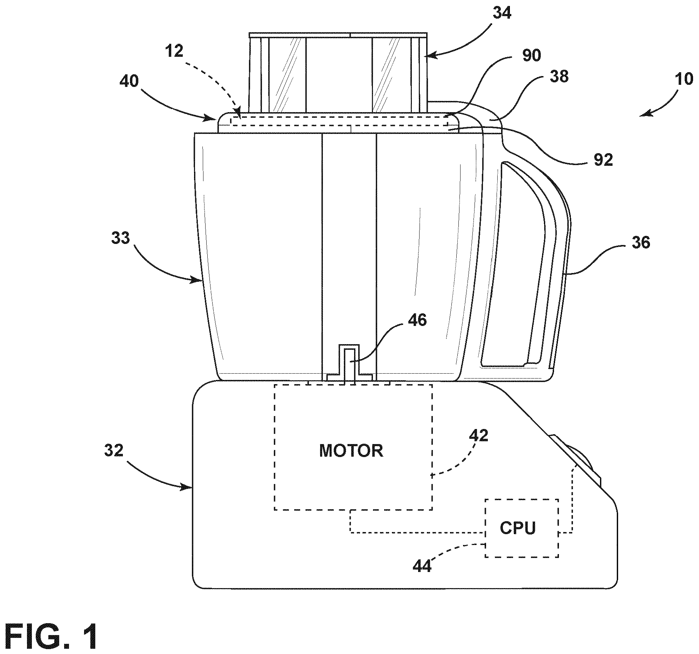

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a . . . " does not, without more constraints, preclude the existence of additional identical elements in the process, method, article, or apparatus that comprises the element.

Referring to FIGS. 1-3, reference numeral 10 generally designates a food processor appliance with a dicer assembly 12 in accordance with a first construction. The dicer assembly 12 includes a blade unit 14 that has a driven hub 16, a first arm 18 that extends from the driven hub 16, and a second arm 20 that extends from the driven hub 16 opposite the first arm 18. A first blade 22 is connected to and extends along the first arm 18. A first trolley 24 extends from the first arm 18 opposite the driven hub 16, and a second trolley 26 extends from the second arm 20 opposite the driven hub 16. An outer ring 28 defines a guide rail 30 slidably coupled with the first trolley 24 and the second trolley 26.

With reference now to FIG. 1, the food processor appliance 10 may include a base 32, a bowl assembly 33 that extends from the base 32, and a feed chute assembly 34 that extends from the bowl assembly 33 opposite the base 32. The feed chute assembly 34 may selectively couple to the bowl assembly 33, and the bowl assembly 33 may selectively couple to the base 32. The bowl assembly 33 may include a handle 36, and the feed chute assembly 34 may include an engagement member 38 configured to selectively lock and retain the feed chute assembly 34 in place on the bowl assembly 33. The feed chute assembly 34 includes a dicer assembly housing 40 for locating the dicer assembly 12. The base 32 may include a motor 42 and a controller 44 operably connected to the motor 42. The motor 42 is configured to rotatably power a drive mechanism or output drive shaft 46, which, in turn, rotatably drives the dicer assembly 12 via operable connection to the driven hub 16. In operation, foodstuff is located in the feed chute assembly 34 where it contacts the dicer assembly 12. The blade unit 14, as driven by the motor 42, then rotates cutting the foodstuff and, thereafter, routes the cut foodstuff into the bowl assembly 33.

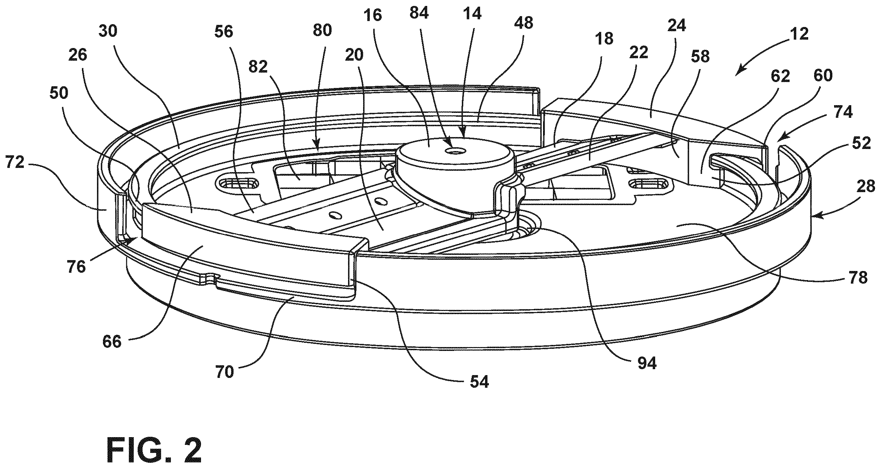

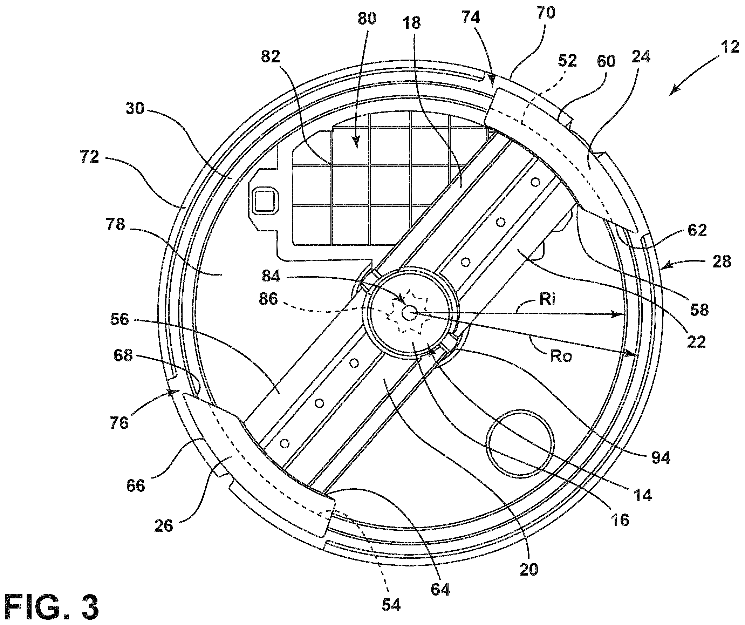

With reference now to FIGS. 2-3, the guide rail 30 is annularly shaped and defines an inner radius "Ri" and an outer radius "Ro" (FIG. 3). The guide rail 30 includes at least one lip that at least partially defines at least one of the inner radius Ri or the outer radius Ro. For example, the at least one lip may include an inner lip 48 that defines the inner radius Ri and an outer lip 50 that defines the outer radius Ro. The at least one lip is in an overlapping alignment with the first trolley 24 and the second trolley 26. For example, an outwardly extending flange 52 may be connected to one of the first trolley 24 and the second trolley 26 and the inner lip 48 is in overlapping radial alignment with the outwardly extending flange 52. An inwardly extending flange 54 may be connected to one of the first trolley 24 and the second trolley 26, and the outer lip 50 is in overlapping radial alignment with the inwardly extending flange 54. As best illustrated in FIG. 2, the outwardly extending flange 52 extends from the first trolley 24 and the inwardly extending flange 54 extends from the second trolley 26. The outwardly extending flange 52 does not extend from the first trolley 24, and the inwardly extending flange 54 does not extend from the second trolley 26. In this manner, the outwardly extending flange 52 and the inwardly extending flange 54 extend in the same direction because they are both located on diametrically opposed trolleys 24, 26. As such, the blade unit 14 can be selectively inserted into the outer ring 28 via movement generally in the direction of the outwardly extending flange 52 and the inwardly extending flange 54. It should be appreciated that a second blade 56 is connected to and extends along the second arm 20. The first blade 22 and the second blade 56 may face opposite directions such that rotation of the blade unit 14 causes the blades 22, 56 to cut foodstuff in a unidirectional rotation.

With continued reference to FIGS. 2-3, the first trolley 24 includes a first radial inner face 58 and a first radial outer face 60. The first radial inner face 58 and the first radial outer face 60 may be substantially radially shaped in close conformity with the inner radius Ri or the outer radius Ro, respectively. A first wedge face 62 extends between the first radial inner face 58 and the first radial outer face 60. More particularly, the first radial inner face 58 extends circumferentially and the first radial outer face 60 extends circumferentially a larger distance than the radially inner face 58 to define the first wedge face 62. The first wedge face 62 may extend in a direction of the first blade 22 such that, during rotation of the blade unit 14, the first wedge face 62 rotationally travels in a direction of cutting. Similarly, the second trolley 26 includes a second radial inner face 64 and a second radial outer face 66. The second radial inner face 64 and the second radial outer face 66 may be substantially radially shaped in close conformity with the inner radius Ri or the outer radius Ro, respectively. A second wedge face 68 extends between the second radial inner face 64 and the second radial outer face 66. More particularly, the second radial inner face 64 extends circumferentially and the second radial outer face 66 extends circumferentially a larger distance than the radially inner face 64 to define the second wedge face 68. The second wedge face 68 may extend in a direction of the second blade 56 such that, during rotation of the blade unit 14, the second wedge face 68 rotationally travels in a direction of cutting.

The guide rail 30 may be located within an outer perimeter 70 of the outer ring 28. A sidewall 72 may extend along the outer perimeter 70 of the outer ring 28 and define a first port 74 and a second port 76 that are diametrically opposed. The first port 74 and the second port 76 facilitate connection of the blade unit 14. The outer ring 28 may further include a floor 78 that defines an opening 80, and a grill-shaped blade apparatus 82 is located in the opening 80. The feed chute assembly 34 may include a foodstuff passage in general alignment with the grill-shaped blade apparatus 82 such that, in use, foodstuff is pressed into cutting contact with the grill-shaped blade apparatus 82 as the blade unit 14 slices the foodstuff generally along a plane of rotation. The driven hub 16 may include an aperture 84 with at least one connection structure 86 (FIG. 3) that extends into the aperture 84 to facilitate connection to a driving mechanism, such as the motor 42 and the output drive shaft 46. With reference back to FIG. 1, the feed chute assembly 34 may further define a dicer assembly housing 40 that includes a top portion 90 and a bottom portion 92 that sandwiches the dicer assembly 12 therein. The floor 78 may include a pocket 94 that accommodates a bottom surface of the driven hub 16, and the top portion 90 of the dicer assembly housing 40 may contact a top surface of the driven hub 16. The top portion 90 and the bottom portion 92 may be selectively connected to facilitate insertion of the dicer assembly 12 (e.g., at least the blade unit 14). The first arm 18 may be angled upwardly towards the first blade 22, and the second arm 20 may be angled upwardly towards the second blade 56. In this manner, foodstuff cut by the blades 22, 56 may be pushed downwardly in a direction of the opening 80 during rotation.

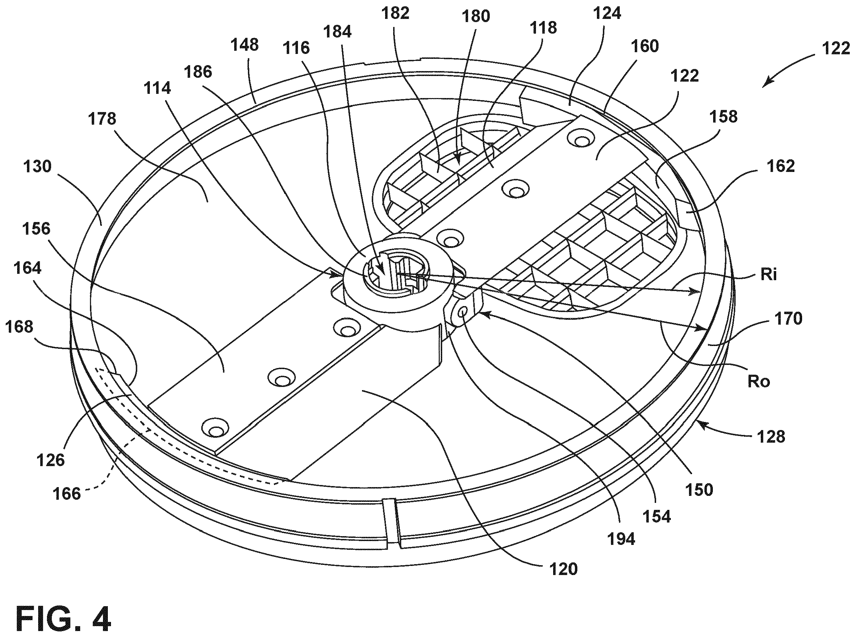

With reference now to FIG. 4, a dicer assembly 112 is illustrated in accordance with a second construction. The dicer assembly 112 may include all the same features, constructions, materials, and may be implemented in the same food processor appliance 10 as the other constructions described herein. More particularly, the dicer assembly 112 includes a blade unit 114 that has a driven hub 116, a first arm 118 that extends from the driven hub 116, and a second arm 120 that extends from the driven hub 116 opposite the first arm 118. A first blade 122 is connected to and extends along the first arm 118. A first trolley 124 extends from the first arm 118 opposite the driven hub 116, and a second trolley 126 extends from the second arm 120 opposite the driven hub 116. An outer ring 128 defines a guide rail 130 slidably coupled with the first trolley 124 and the second trolley 126.

With continued reference to FIG. 4, the guide rail 130 is annularly shaped and defines an inner radius "Ri" and an outer radius "Ro". The guide rail 130 includes at least one lip that at least partially defines at least one of the inner radius Ri or the outer radius Ro. For example, the at least one lip may include an inner lip 148 that defines the inner radius Ri. The at least one lip is in an overlapping alignment with the first trolley 124 and the second trolley 126. A second blade 156 is connected to and extends along the second arm 120. The first blade 122 and the second blade 156 may face opposite directions such that rotation of the blade unit 114 causes the blades 122, 156 to cut foodstuff in a unidirectional rotation. The blade unit 114 includes a hinge 150 that is configured to permit at least part of the first arm 118 to pivot with respect to at least part of the second arm 120 to facilitate connection of the blade unit 114 into the guide rail 130. For example, the hinge 150 may be located on the driven hub 116. The first arm 118 may include one or more pivot shafts 154 pivotally connected to the driven hub 116.

With continued reference to FIG. 4, the first trolley 124 includes a first radial inner face 158 that is substantially radially shaped and a first radial outer face 160 that is substantially radially shaped. The first radial outer face 160 may be located between the inner radius Ri or the outer radius Ro. A first wedge face 162 extends between the first radial inner face 158 and the first radial outer face 160. More particularly, the first radial inner face 158 extends circumferentially and the first radial outer face 160 extends circumferentially a larger distance than the radially inner face 158 to define the first wedge face 162. The first wedge face 162 may extend in a direction of the first blade 122 such that, during rotation of the blade unit 114, the first wedge face 162 rotationally travels in a direction of cutting. Similarly, the second trolley 126 includes a second radial inner face 164 that is substantially radially shaped and a second radial outer face 166 that is substantially radially shaped. The second radial outer face 166 may be located between the inner radius Ri or the outer radius Ro. A second wedge face 168 extends between the second radial inner face 164 and the second radial outer face 166. More particularly, the second radial inner face 164 extends circumferentially and the second radial outer face 166 extends circumferentially a larger distance than the radially inner face 164 to define the second wedge face 168. The second wedge face 168 may extend in a direction of the second blade 156 such that, during rotation of the blade unit 114, the second wedge face 168 rotationally travels in a direction of cutting.

The guide rail 130 may be located on an outer perimeter 170 of the outer ring 128. The outer ring 128 may include a floor 178 that defines an opening 180, and a grill-shaped blade apparatus 182 is located in the opening 180. The feed chute assembly 34 may include a foodstuff passage in general alignment with the grill-shaped blade apparatus 182 such that, in use, foodstuff is pressed into cutting contact with the grill-shaped blade apparatus 182 as the blade unit 114 slices the foodstuff generally along a plane of rotation. The driven hub 116 may include an aperture 184 with at least one connection structure 186 that extends into the aperture 184 to facilitate connection to a driving mechanism, such as the motor 42 and the output drive shaft 46. When the dicer assembly 112 is integrated into a food processor appliance 10, such as that illustrated in FIG. 1, the top portion 90 and the bottom portion 92 of the dicer assembly housing 40 may sandwich the dicer assembly 112 therein. The floor 178 may include a pocket 194 that accommodates a bottom surface of the driven hub 116, and the top portion 90 of the dicer assembly housing 40 may contact a top surface of the driven hub 116. The first arm 118 may be angled upwardly towards the first blade 122, and the second arm 120 may be angled upwardly towards the second blade 156. In this manner, foodstuff cut by the blades 122, 156 may be pushed downwardly in a direction of the opening 180 during rotation.

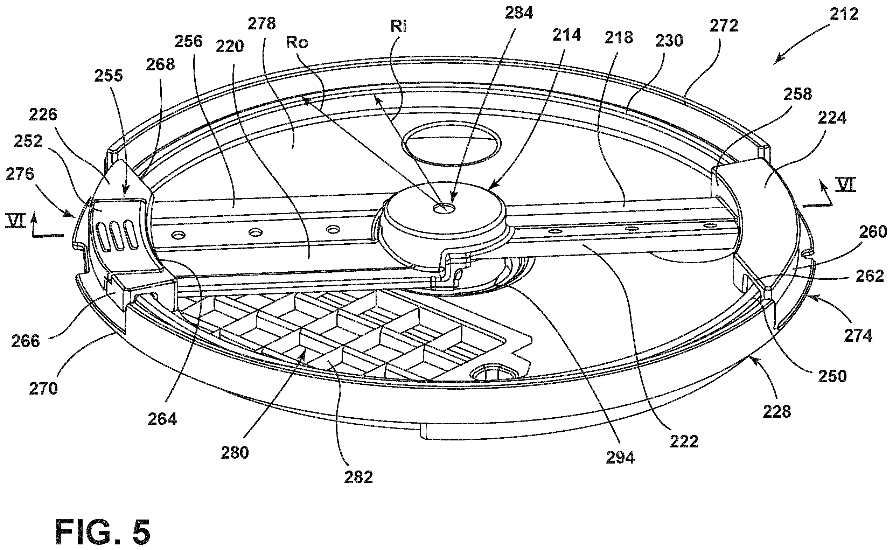

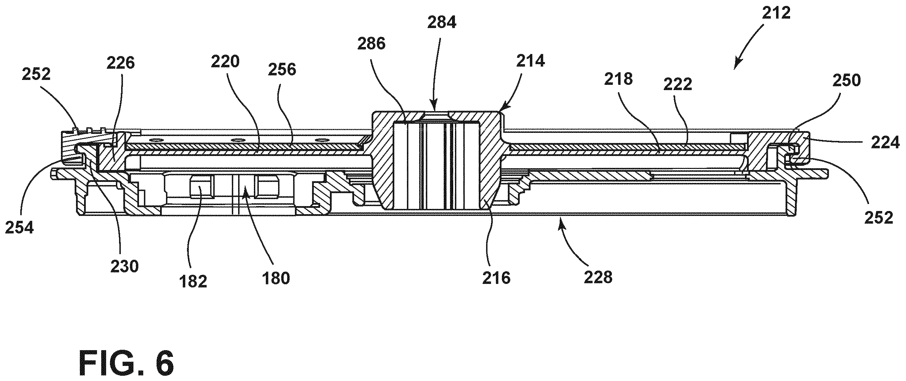

With reference now to FIGS. 5-6, a dicer assembly 212 is illustrated in accordance with a third construction. The dicer assembly 212 may include all of the same features, constructions, materials, and may be implemented in the same food processor appliance 10 as the other constructions described herein. More particularly, the dicer assembly 212 includes a blade unit 214 that has a driven hub 216 (FIG. 6), a first arm 218 that extends from the driven hub 216, and a second arm 220 that extends from the driven hub 216 opposite the first arm 218. A first blade 222 is connected to and extends along the first arm 218. A first trolley 224 extends from the first arm 218 opposite the driven hub 216, and a second trolley 226 extends from the second arm 220 opposite the driven hub 216. An outer ring 228 defines a guide rail 230 slidably coupled with the first trolley 224 and the second trolley 226.

With continued reference to FIGS. 5-6, the guide rail 230 is annularly shaped and defines an inner radius "Ri" and an outer radius "Ro" (FIG. 6). The guide rail 230 includes at least one lip that at least partially defines at least one of the inner radius Ri or the outer radius Ro. For example, the at least one lip may include an outer lip 250 that defines the outer radius Ro. The at least one lip is in an overlapping alignment with the first trolley 224 and the second trolley 226. For example, an inwardly extending flange 254 (FIG. 6) may be connected to one of the first trolley 224 and the second trolley 226, and the outer lip 250 is in overlapping radial alignment with the inwardly extending flange 254. A second blade 256 is connected to and extends along the second arm 220. The first blade 222 and the second blade 256 may face opposite directions such that rotation of the blade unit 214 causes the blades 222, 256 to cut foodstuff in unidirectional rotation. The blade unit 214 includes a clip 252 defining the inwardly extending flange 254 that is selectably coupled to a depression 255 in second trolley 256. More particularly, the clip 252 includes a disconnected position where the inwardly extending flange 254 is radially spaced from the outer lip 250 and a connected position where the inwardly flange 254 is in overlapping radial alignment with the outer lip 250. The clip 252 may include snap-fit features (not shown) configured to snap-fit into the second trolley 256.

With continued reference to FIGS. 5-6, the first trolley 224 includes a first radial inner face 258 that is substantially radially shaped and a first radial outer face 260 that is substantially radially shaped. The inwardly extending flange 254 may extend (from a radially outward direction) at least partially between the inner radius Ri or the outer radius Ro. A first wedge face 262 extends between the first radial inner face 258 and the first radial outer face 260. More particularly, the first radial inner face 258 extends circumferentially and the first radial outer face 260 extends circumferentially a larger distance than the radially inner face 258 to define the first wedge face 262. The first wedge face 262 may extend in a direction of the first blade 222 such that, during rotation of the blade unit 214, the first wedge face 262 rotationally travels in a direction of cutting. Similarly, the second trolley 226 includes a second radial inner face 264 that is substantially radially shaped and a second radial outer face 266 that is substantially radially shaped. The inwardly extending flange 254 on the clip 252 may extend (from a radially outward direction) at least partially between the inner radius Ri or the outer radius Ro. A second wedge face 268 extends between the second radial inner face 264 and the second radial outer face 266. More particularly, the second radial inner face 264 extends circumferentially and the second radial outer face 266 extends circumferentially a larger distance than the radially inner face 264 to define the second wedge face 268. The second wedge face 268 may extend in a direction of the second blade 256 such that, during rotation of the blade unit 214, the second wedge face 268 rotationally travels in a direction of cutting.

The guide rail 230 may be located within an outer perimeter 270 of the outer ring 228. A sidewall 272 may extend along the outer perimeter 270 of the outer ring 228 and define a first port 274 and a second port 276 that are diametrically opposed. The first port 274 and the second port 276 facilitate connection of the blade unit 214 to the outer ring 228. The outer ring 228 may further include a floor 278 that defines an opening 280 and a grill-shaped blade apparatus 282 is located in the opening 280. The feed chute assembly 34 may include a foodstuff passage in general alignment with the grill-shaped blade apparatus 282 such that, in use, foodstuff is pressed into cutting contact with the grill-shaped blade apparatus 282 as the blade unit 214 slices the foodstuff generally along a plane of rotation. The driven hub 216 may include an aperture 284 with at least one connection structure 286 (FIG. 6) extending into the aperture 284 to facilitate connection to a driving mechanism, such as the motor 42 and the output drive shaft 46. When the dicer assembly 212 is integrated into a food processor appliance 10, such as that illustrated in FIG. 1, the top portion 90 and the bottom portion 92 of the dicer assembly housing 40 may sandwich the dicer assembly 212 therein. The floor 278 may include a pocket 294 that accommodates a bottom surface of the driven hub 216 and the top portion 90 of the dicer assembly housing 40 may contact a top surface of the driven hub 216. The top portion 90 and the bottom portion 92 may be selectively connected to facilitate insertion of the dicer assembly 212 (e.g., at least the blade unit 214). The first arm 218 may be angled upwardly towards the first blade 222 and the second arm 220 may be angled upwardly towards the second blade 256. In this manner, foodstuff cut by the blades 222, 256 may be pushed downwardly in a direction of the opening 280 during rotation.

The invention disclosed herein is further summarized in the following paragraphs and is further characterized by combinations of any and all of the various aspects described therein.

According to one aspect of the present disclosure, a dicer assembly for a food processor appliance includes a blade unit that has a driven hub, a first arm that extends from the driven hub, and a second arm that extends from the driven hub opposite the first arm. A first blade is connected to and extends along the first arm. A first trolley extends from the first arm opposite the driven hub, and a second trolley extends from the second arm opposite the driven hub. An outer ring defines a guide rail slidably coupled with the first trolley and the second trolley.

According to another aspect, a guide rail defines at least one lip that is in an overlapping alignment with a first trolley and a second trolley.

According to another aspect, a guide rail is annularly shaped and defines an inner radius and an outer radius, where at least one of the inner radius or the outer radius are defined by an at least one lip.

According to another aspect, an outwardly extending flange is connected to one of a first trolley and a second trolley and at least one lip includes an inner lip defining an inner radius in overlapping radial alignment with the outwardly extending flange.

According to another aspect, an inwardly extending flange is connected to one of a first trolley and a second trolley and at least one lip further includes an outer lip that defines an outer radius in overlapping radial alignment with the inwardly extending flange.

According to another aspect, an outwardly extending flange extends from a first trolley and an inwardly extending flange extends from a second trolley.

According to another aspect, an outwardly extending flange does not extend from a first trolley and an inwardly extending flange does not extend from a second trolley.

According to another aspect, at least one lip includes an outer lip that defines an outer radius and an inwardly extending flange extends from a first trolley and is in overlapping radial alignment with the outer lip.

According to another aspect, a second trolley includes a clip that further defines an inwardly extending flange that includes a disconnected position where the inwardly extending flange is radially spaced from an outer lip and a connected position where the inwardly extending flange is in overlapping radial alignment with the outer lip.

According to another aspect, at least one lip includes an inner lip that defines an inner radius.

According to another aspect, a blade unit includes a hinge configured to permit at least part of a first arm to pivot with respect to at least part of a second arm to facilitate connection of a blade unit.

According to another aspect, an outer ring defines a sidewall located radially outwardly from a guide rail and a sidewall defines a pair of opposing ports to facilitate connection of a blade unit.

According to yet another aspect of the present disclosure, a dicer assembly for a food processor appliance includes a blade unit that has a driven hub, a first arm that extends from the driven hub, and a second arm that extends from the driven hub opposite the first arm. A first blade is connected to and extends along the first arm, and a second blade is connected to and extends along the second arm. A first trolley extends from the first arm opposite the driven hub, and a second trolley extends from the second arm opposite the driven hub. An outer ring defines a floor, and a guide rail extends annularly from the floor that is slideably coupled with the first trolley and the second trolley.

According to another aspect, a floor defines an opening and a grill-shaped blade apparatus is located in the opening.

According to another aspect, a driven hub includes an aperture with at least one connection structure extending into the aperture to facilitate connection to a driving mechanism and rotation of a blade unit.

According to another aspect, a guide rail defines an inner lip defining an inner radius of a guide rail.

According to another aspect, a hinge pivotally connects a first arm to a driven hub.

According to another aspect, a guide rail defines at least one of an inner lip or an outer lip and at least one of an outwardly extending flange or an inwardly extending flange extends from both a first trolley and a second trolley.

According to yet another aspect of the present disclosure, a dicer assembly for a food processor appliance includes an outer ring that defines a guide rail with an outer lip that defines an outer radius of the guide rail. A blade unit includes a driven hub, a first arm that extends from the driven hub, and a second arm that extends from the driven hub opposite the first arm. A first blade is connected to and extends along the first arm and a second blade is connected to and extends along the second arm. A first trolley extends from the first arm opposite the driven hub and includes an inwardly extending flange that is slidably coupled and in overlapping radial alignment with the outer lip. A second trolley extends from the second arm opposite the driven hub and is slidably coupled to the guide rail.

According to another aspect, a guide rail includes an inner lip that defines an inner radius of a guide rail and a second arm includes an outwardly extending flange slidably coupled and in overlapping radial alignment with the inner lip.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

## Claims

1. A dicer assembly (12, 212) for a food processor appliance (10) comprising:
a blade unit (14, 214) including a driven hub (16, 216), a first arm (18, 218) extending from the driven hub (16, 216), and a second arm (20, 220) extending from the driven hub (16, 216) opposite the first arm (18, 218);
a first blade connected to and extending along the first arm (18, 218);
a first trolley (24, 224) extending from the first arm (18, 218) opposite the driven hub (16, 216);
a second trolley (26, 226) extending from the second arm (20, 220) opposite the driven hub (16, 216);
**characterized by**
an outer ring (28, 228) defining a guide rail (30, 230) with an outer lip (50, 250) that is in an overlapping alignment and slidably coupled with the first trolley (24, 224) and the second trolley (26, 226), wherein the guide rail (30, 230) is annularly shaped and defines an inner radius (Ri) and an outer radius (Ro), wherein the outer radius (Ro) is defined by the outer lip (50, 250); and
an inwardly extending flange (54, 254) is connected to one of the first trolley (24, 224) and the second trolley (26, 226) and is in overlapping radial alignment with the outer lip (50, 250).

2. The dicer assembly (12, 212) of claim 1, wherein the guide rail (30, 230) defines an inner lip (48) that is in an overlapping alignment with the first trolley (24, 224) and the second trolley (26, 226).

3. The dicer assembly (12, 212) of claim 2, wherein the inner radius (Ri) is defined by the inner lip (48).

4. The dicer assembly (12) of claim 3, wherein an outwardly extending flange (52) is connected to one of the first trolley (24) and the second trolley (26) and the inner lip (48) is in overlapping radial alignment with the outwardly extending flange (52).

5. The dicer assembly (12) as in one of claims 1-4, wherein the inwardly extending flange (54) extends from both of the first trolley (24) and the second trolley (26).

6. The dicer assembly (12) of claim 4, wherein the outwardly extending flange (52) extends from the first trolley (24) and the inwardly extending flange (54) extends from the second trolley (26).

7. The dicer assembly (12) of claim 6, wherein the outwardly extending flange (52) does not extend from the second trolley (26) and the inwardly extending flange (54) does not extend from the first trolley (24).

8. The dicer assembly (12, 212) of claim 3, wherein the at least one lip (50, 250) includes an outer lip (50, 250) defining the outer radius (Ro) and an inwardly extending flange (54, 254) extends from the second trolley (226) and is in overlapping radial alignment with the outer lip (50, 250).

9. The dicer assembly (212) of claim 8, wherein the second trolley (226) includes a clip (252) further defining the inwardly extending flange (254) that includes a disconnected position where the inwardly extending flange (254) is radially spaced from the outer lip (250) and a connected position where the inwardly extending flange (254) is in overlapping radial alignment with the outer lip (250).

10. The dicer assembly (12, 212) of claim 3, wherein the at least one lip (48, 50, 250) includes an inner lip (48, 50, 250) defining the inner radius (Ri).

11. The dicer assembly (12, 212) as in one of claims 1-3, wherein the outer ring (28, 228) defines a sidewall (72, 272) located radially outwardly from the guide rail (30, 230) and the sidewall (72, 272) defines a pair of opposing ports (74, 76, 274, 276) to facilitate connection of the blade unit (14, 214).

12. The dicer assembly (12, 212) as in one of claims 1-10, wherein the outer ring (28, 228) defines a floor (78, 278), and the floor (78, 278) defines an opening (80, 280) and a blade apparatus (82, 282) is located in the opening (80, 280).

13. The dicer assembly (12, 212) of claim 12, wherein the blade apparatus (82, 282) is grill-shaped.

14. The dicer assembly (12, 212) as in one of claims 1-10, wherein the driven hub (16, 216) includes an aperture (84, 284) with at least one connection structure (86, 186, 286) extending into the aperture (84, 284) to facilitate connection to a driving mechanism and rotation of the blade unit (14, 214).

## Patentansprüche

1. Schneideanordnung (12, 212) für eine Küchenmaschine (10), umfassend:
eine Messereinheit (14, 214) mit einer angetriebenen Nabe (16, 216), einem ersten Arm (18, 218), der sich von der angetriebenen Nabe (16, 216) erstreckt, und einem zweiten Arm (20, 220), der sich von der angetriebenen Nabe (16, 216) gegenüber dem ersten Arm (18, 218) erstreckt; und
eine erste Schneide, die mit dem ersten Arm (18, 218) verbunden ist und sich entlang diesem erstreckt;
einen ersten Laufwagen (24, 224), die sich von dem ersten Arm (18, 218) gegenüber der angetriebenen Nabe (16, 216) erstreckt;
einen zweiten Laufwagen (26, 226), die sich von dem zweiten Arm (20, 220) gegenüber der angetriebenen Nabe (16, 216) erstreckt;
**gekennzeichnet durch**
einen Außenring (28, 228), der eine Führungsschiene (30, 230) mit einer äußeren Lippe (50, 250) definiert, die sich in einer überlappenden Ausrichtung und gleitend mit dem ersten Laufwagen (24, 224) und dem zweiten Laufwagen (26, 226) gekoppelt ist, wobei die Führungsschiene (30, 230) ringförmig ist und einen Innenradius (Ri) und einen Außenradius (Ro) definiert, wobei der Außenradius (Ro) durch die äußere Lippe (50, 250) definiert ist; und
ein sich nach innen erstreckender Flansch (54, 254) mit dem ersten Laufwagen (24, 224) oder dem zweiten Laufwagen (26, 226) verbunden ist und sich in überlappender radialer Ausrichtung mit der äußeren Lippe (50, 250) befindet.

2. Schneideanordnung (12, 212) nach Anspruch 1, wobei die Führungsschiene (30, 230) eine innere Lippe (48) definiert, die sich in einer überlappenden Ausrichtung mit dem ersten Laufwagen (24, 224) und dem zweiten Laufwagen (26, 226) befindet.

3. Schneideanordnung (12, 212) nach Anspruch 2, wobei der innere Radius (Ri) durch die innere Lippe (48) definiert ist.

4. Schneideanordnung (12) nach Anspruch 3, wobei ein sich nach außen erstreckender Flansch (52) mit dem ersten Laufwagen (24) oder dem zweiten Laufwagen (26) verbunden ist und die innere Lippe (48) mit dem sich nach außen erstreckenden Flansch (52) überlappend radial ausgerichtet ist.

5. Schneideanordnung (12) nach einem der Ansprüche 1 bis 4, wobei der sich nach innen erstreckende Flansch (54) sich sowohl von dem ersten Laufwagen (24) als auch von dem zweiten Laufwagen (26) erstreckt.

6. Schneideanordnung (12) nach Anspruch 4, wobei der sich nach außen erstreckende Flansch (52) sich von dem ersten Laufwagen (24) und der sich nach innen erstreckende Flansch (54) sich von dem zweiten Laufwagen (26) erstreckt.

7. Schneideanordnung (12) nach Anspruch 6, wobei der sich nach außen erstreckende Flansch (52) sich nicht von dem zweiten Laufwagen (26) erstreckt und der sich nach innen erstreckende Flansch (54) sich nicht von dem ersten Laufwagen (24) erstreckt.

8. Schneideanordnung (12, 212) nach Anspruch 3, wobei die mindestens eine Lippe (50, 250) eine äußere Lippe (50, 250) umfasst, die den äußeren Radius (Ro) definiert, und ein sich nach innen erstreckender Flansch (54, 254) sich von dem zweiten Laufwagen (226) erstreckt und in überlappender radialer Ausrichtung mit der äußeren Lippe (50, 250) ist.

9. Schneideanordnung (212) nach Anspruch 8, wobei der zweite Laufwagen (226) einen Clip (252) aufweist, der ferner den sich nach innen erstreckenden Flansch (254) definiert, der eine getrennte Position, in welcher der sich nach innen erstreckende Flansch (254) radial von der äußeren Lippe (250) beabstandet ist, und eine verbundene Position aufweist, in der der sich nach innen erstreckende Flansch (254) in überlappender radialer Ausrichtung mit der äußeren Lippe (250) ist.

10. Schneideanordnung (12, 212) nach Anspruch 3, wobei die mindestens eine Lippe (48, 50, 250) eine innere Lippe (48, 50, 250) aufweist, die den inneren Radius (Ri) definiert.

11. Schneideanordnung (12, 212) nach einem der Ansprüche 1 bis 3, wobei der Außenring (28, 228) eine Seitenwand (72, 272) definiert, die von der Führungsschiene (30, 230) radial nach außen angeordnet ist, und die Seitenwand (72, 272) ein Paar gegenüberliegender Öffnungen (74, 76, 274, 276) definiert, um die Verbindung der Messereinheit (14, 214) zu erleichtern.

12. Schneideanordnung (12, 212) nach einem der Ansprüche 1-10, wobei der Außenring (28, 228) einen Boden (78, 278) definiert und der Boden (78, 278) eine Öffnung (80, 280) definiert und eine Schneidvorrichtung (82, 282) in der Öffnung (80, 280) angeordnet ist.

13. Schneideanordnung (12, 212) nach Anspruch 12, wobei die Schneidvorrichtung (82, 282) grillförmig ist.

14. Schneideanordnung (12, 212) nach einem der Ansprüche 1-10, wobei die angetriebene Nabe (16, 216) eine Öffnung (84, 284) mit mindestens einer Verbindungsstruktur (86, 186, 286) aufweist, die sich in die Öffnung (84, 284) erstreckt, um die Verbindung mit einem Antriebsmechanismus und die Drehung der Messereinheit (14, 214) zu erleichtern.

## Revendications

1. Ensemble de découpage en dés (12, 212) pour un appareil de robot de cuisine (10) comprenant :
une unité de lames (14, 214) comportant un moyeu entraîné (16, 216), un premier bras (18, 218) s'étendant à partir du moyeu entraîné (16, 216), et un deuxième bras (20, 220) s'étendant à partir du moyeu entraîné (16, 216) à l'opposé du premier bras (18, 218) ;
une première lame reliée à et s'étendant le long du premier bras (18, 218) ;
un premier chariot (24, 224) s'étendant à partir du premier bras (18, 218) à l'opposé du moyeu entraîné (16, 216) ;
un deuxième chariot (26, 226) s'étendant à partir du deuxième bras (20, 220) à l'opposé du moyeu entraîné (16, 216) ;
**caractérisé par**
un anneau extérieur (28, 228) définissant un rail de guidage (30, 230) avec une lèvre extérieure (50, 250) qui est en un alignement de chevauchement et couplé de manière coulissante au premier chariot (24, 224) et au deuxième chariot (26, 226), dans lequel le rail de guidage (30, 230) est de forme annulaire et définit un rayon intérieur (Ri) et un rayon extérieur (Ro), dans lequel le rayon extérieur (Ro) est défini par la lèvre extérieure (50, 250) ; et
une bride s'étendant vers l'intérieur (54, 254) est reliée à l'un parmi le premier chariot (24, 224) et le deuxième chariot (26, 226) et est en alignement radial de chevauchement avec la lèvre extérieure (50, 250).

2. Ensemble de découpage en dés (12, 212) selon la revendication 1, dans lequel le rail de guidage (30, 230) définit une lèvre intérieure (48) qui est en un alignement de chevauchement avec le premier chariot (24, 224) et le deuxième chariot (26, 226).

3. Ensemble de découpage en dés (12, 212) selon la revendication 2, dans lequel le rayon intérieur (Ri) est défini par la lèvre intérieure (48).

4. Ensemble de découpage en dés (12) selon la revendication 3, dans lequel une bride s'étendant vers l'extérieur (52) est reliée à l'un parmi le premier chariot (24) et le deuxième chariot (26) et la lèvre intérieure (48) est en alignement radial de chevauchement avec la bride s'étendant vers l'extérieur (52).

5. Ensemble de découpage en dés (12) selon l'une des revendications 1-4, dans lequel la bride s'étendant vers l'intérieur (54) s'étend à partir à la fois du premier chariot (24) et du deuxième chariot (26).

6. Ensemble de découpage en dés (12) selon la revendication 4, dans lequel la bride s'étendant vers l'extérieur (52) s'étend à partir du premier chariot (24) et la bride s'étendant vers l'intérieur (54) s'étend à partir du deuxième chariot (26).

7. Ensemble de découpage en dés (12) selon la revendication 6, dans lequel la bride s'étendant vers l'extérieur (52) ne s'étend pas à partir du deuxième chariot (26) et la bride s'étendant vers l'intérieur (54) ne s'étend pas à partir du premier chariot (24).

8. Ensemble de découpage en dés (12, 212) selon la revendication 3, dans lequel l'au moins une lèvre (50, 250) comporte une lèvre extérieure (50, 250) définissant le rayon extérieur (Ro) et une bride s'étendant vers l'intérieur (54, 254) s'étend à partir du deuxième chariot (226) et est en alignement radial de chevauchement avec la lèvre extérieure (50, 250).

9. Ensemble de découpage en dés (212) selon la revendication 8, dans lequel le deuxième chariot (226) comporte un clip (252) définissant en outre la bride s'étendant vers l'intérieur (254) qui comporte une position déconnectée où la bride s'étendant vers l'intérieur (254) est espacée radialement de la lèvre extérieure (250) et une position connectée où la bride s'étendant vers l'intérieur (254) est en alignement radial de chevauchement avec la lèvre extérieure (250).

10. Ensemble de découpage en dés (12, 212) selon la revendication 3, dans lequel l'au moins une lèvre (48, 50, 250) comporte une lèvre intérieure (48, 50, 250) définissant le rayon intérieur (Ri).

11. Ensemble de découpage en dés (12, 212) selon l'une des revendications 1-3, dans lequel l'anneau extérieur (28, 228) définit une paroi latérale (72, 272) située radialement vers l'extérieur par rapport au rail de guidage (30, 230) et la paroi latérale (72, 272) définit une paire d'orifices opposés (74, 76, 274, 276) pour faciliter la liaison de l'unité de lames (14, 214).

12. Ensemble de découpage en dés (12, 212) selon l'une des revendications 1-10, dans lequel l'anneau extérieur (28, 228) définit un fond (78, 278), et le fond (78, 278) définit une ouverture (80, 280) et un dispositif à lames (82, 282) est situé dans l'ouverture (80, 280).

13. Ensemble de découpage en dés (12, 212) selon la revendication 12, dans lequel le dispositif à lames (82, 282) est en forme de grille.

14. Ensemble de découpage en dés (12, 212) selon l'une des revendications 1-10, dans lequel le moyeu entraîné (16, 216) comporte un orifice (84, 284) avec au moins une structure de liaison (86, 186, 286) s'étendant dans l'orifice (84, 284) pour faciliter la liaison à un mécanisme d'entraînement et la rotation de l'unité de lames (14, 214).
